(19) **Europäisches Patentamt / European Patent Office / Office européen des brevets**

(11) **EP 1 962 278 A1**

(12) # EUROPEAN PATENT APPLICATION

(43) Date of publication:
 **27.08.2008 Bulletin 2008/35**

(51) Int Cl.:
 **G10L 15/12** [(2006.01)]   **G10L 21/04** [(2006.01)]

(21) Application number: **07102589.4**

(22) Date of filing: **16.02.2007**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK RS**

(71) Applicant: **VRIJE UNIVERSITEIT BRUSSEL**
 **1050 Brussel (BE)**

(72) Inventors:
 • **Verhelst, Werner**
  **B-1853, STROMBEEK-BEVER (BE)**
 • **Soens, Pieter**
  **B-1030, SCHAARBEEK (BE)**

(74) Representative: **pronovem**
 **Office Van Malderen**
 **Avenue Josse Goffin 158**
 **1082 Bruxelles (BE)**

(54) **Method and device for timing synchronisation**

(57)    The present invention is related to a method for time synchronisation of acoustic signals comprising the steps of
- receiving a first and a second acoustic signal,
- determining information related to the timing relationship between the first and the second acoustic signal,
- applying a time scaling function on one of the acoustic signals for adjusting the timing relationship between said signals,

whereby the method further comprises a step wherein said time scaling function is determined by minimisation of the difference between the time scaling function and the timing relationship, whereby said minimisation selects among possible time scaling functions the time scaling function as one yielding natural sounding perceived quality of the time scaled one acoustic signal.

Fig.8

EP 1 962 278 A1

**Description**

**Field of the invention**

The present invention relates to a method and device for the time synchronisation of acoustic signals.

**State of the art**

Time synchronisation of speech utterances can be described as the process of adapting the (time-varying) speaking rate of a first speaker ('original', 'source') to match the speaking rate of a second speaker ('reference'). A system for time synchronisation of speech modifies the original signal so that it becomes 'lip-synchronous' with the reference signal. The modified signal is denoted 'result'.

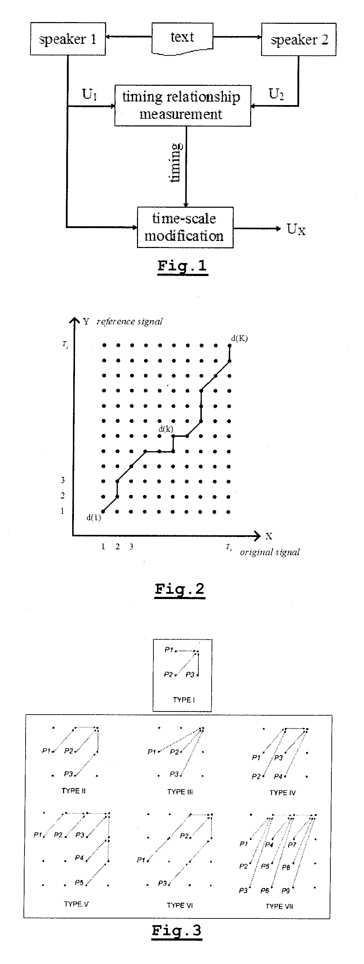

Fig. 1 illustrates the time synchronisation concept as known in the prior art. A same text is spoken by a same (or different) speaker(s), resulting in the utterances $U_1$ (original, source) and $U_2$ (reference). The timing relationship between both utterances is measured, and according to this relationship, the timing differences between both utterances are eliminated by scaling the time axis of the original utterance $U_1$ so that maximum coincidence is attained with the reference utterance $U_2$. After time-scaling, the time-scaled result $U_x$ is obtained which is lip-synchronous with the reference utterance $U_2$.

One of the best known state of the art time registration procedures is dynamic time warping (DTW). DTW is a pattern matching technique, which finds the optimal alignment of two time series. After its introduction in the context of isolated word recognition in the late 60's, DTW has been applied successfully in many research areas. In the music field, DTW has been and still is being used extensively, for query-by-humming applications, real time live tracking of musical performances and score-performance alignment.

In order to find the timing relationship between two recordings by means of DTW, these recordings are analysed and expressed as a sequence of parameter vectors that capture their short-time varying characteristics. This analysis is performed on a short-time basis (for example in the order of 10-ms frames). The parameter vectors of both recordings are then compared mutually and used to construct a so-called "warping path", which can be seen as a two dimensional representation of corresponding or "matching" short-time acoustic features of the recordings being compared. Fig. 2 illustrates a possible warping path. As can be seen from the figure, the warping path is a contiguous set of elements in a grid and represents the optimal alignment between the two recordings.

In a context of isolated word recognition a test pattern is matched against a predefined set of reference patterns (vocabulary) by calculating dissimilarity measures between this test pattern and all elements of the vocabulary. The global pattern dissimilarity measure between two speech patterns X and Y along a specific path $\phi$ can be defined as the weighted and accumulated distortion over the entire utterance:

$$D_\phi(X,Y) \overset{\Delta}{=} \frac{\sum_{k=1}^{K} m(k)d(k)}{\underbrace{\sum_{k=1}^{K} m(k)}_{M_\phi}} \qquad (\text{eq.1})$$

where k denotes the index of the short-time spectral distortions d(k) between 2 acoustic feature vectors along the warping path $\varphi$. If these feature vectors represent the same sound, this local spectral distortion should be zero and otherwise it is positive. Furthermore, $m(k)$ is a path weighting coefficient and $M_\phi$ is a path normalising factor.

Minimising the above expression over all possible paths means that the dissimilarity is measured based on the best possible alignment in order to compensate for the speaking rate differences between the two patterns. The alignment path that minimises the above equation (1) is called the warping path. This thus means that finding the 'best' alignment between a pair of patterns is functionally equivalent to finding the 'best' path through a grid mapping the acoustic features of one pattern to the acoustic features of the other pattern.

As there is obviously an extremely large number of possible paths through the grid, a practical problem arises as of how to choose the warping path such that equation (1) is minimised. For some specific choices of m(k), the global normalisation factor $M_\phi$ can be held constant irrespective of the length of the considered path. In that case, the minimisation problem is reduced to minimising

$$M_\phi D_\phi(X,Y) = \sum_{k=1}^{K} d(k)\,m(k) \qquad (\texttt{eq.2})$$

Under the optimality principle of Bellman, the minimisation problem of eq.(2) can be solved efficiently by means of dynamic programming techniques. Once the minimal dissimilarity measure is found, the warping path itself can be found by means of a trace back procedure. For an application of isolated word recognition, only the minimal global dissimilarity needs to be known, whereas for time synchronisation applications, the warping path itself is of main importance.

If the alignment process must be meaningful in terms of time normalisation for different renditions of a same utterance, some constraints need to be imposed on the form of the warping path. Typical warping constraints that are considered necessary and reasonable for time alignment include the following:

- endpoint constraints
- monotonicity constraints
- local continuity constraints
- global path constraints
- slope constraints

All these various constraints are briefly discussed in the following paragraphs.

For a time synchronisation application the main concern is to know the temporal variations that occur between the speech parts of the two utterances being compared. It is favourable (less computation time and reduced alignment error risk) to isolate the endpoints that mark the beginning and the ending of the speech utterances and to perform the synchronisation in between. This means the warping path should start in (1,1) and end in $(T_x, T_y)$ (see Fig.2) where these coordinate pairs correspond to the fixed temporal limits of the utterances. In cases where the endpoints cannot be determined reliably, the above endpoints need to be relaxed in order to take the uncertainty into consideration.

Imposing monotonicity constraints on the warping path is of crucial importance to linguistic meaning. By imposing these kinds of constraints on the warping path, this path becomes monotonically non-decreasing, which by itself means that the possibility of time reverse warping is eliminated.

As can be seen from Fig. 2, the warping path is a concatenation of 'moves' through a grid of short-time spectral distortion measures. Finding the timing relationship between two speech utterances by way of finding the best temporal match, should not result in the omission of any important information-bearing sound segment. To ensure proper time alignment while keeping any potential loss to a minimum, local continuity constraints are imposed on the warping path. The many forms of local constraints can be classified as local constraints with or without inherent slope limitations (see Fig. 3).

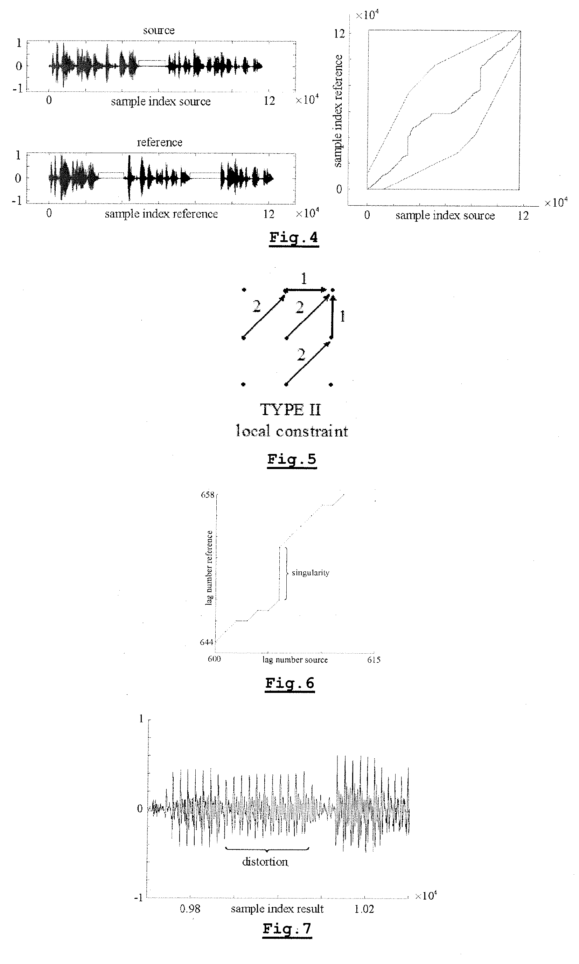

Local constraints without inherent slope limitations (e.g. the type I local constraint in Fig. 3) allow the warping path to be maximally flexible, meaning that no constraints are imposed on the first and higher order derivatives of the warping path (hence the name of this class of constraints). This way, the warping path can contain arbitrarily long horizontal or vertical stretches, which for example correspond to speech pauses that are present in one utterance, but absent in the other. Fig. 4 shows two speech utterances where speech pauses are introduced in different places and the corresponding warping path (a type I local constraint is used for the calculation of this path). The source signal contains one speech pause, while the reference signal contains two speech pauses. From Fig. 4 a long horizontal stretch (corresponds to the speech pause in the source) and two long vertical stretches (which correspond to the speech pauses in the reference signal) can clearly be distinguished. Besides the "long" horizontal and vertical stretches in the warping path, local constraints without inherent slope limitations also lead to many "small" horizontal and vertical portions, which correspond to singularities that result in audible distortions in the time-scaled result. Reference is made to the paper 'Rejection Phenomena in Inter-Signal Voice Transplantation' (W.Verhelst et al, IEEE Workshop on Applications of Signal Processing to Audio and Acoustics, New Paltz, New York, October 19-22, 2003).

Local constraints with inherent slope limitations have been introduced in the context of isolated word recognition, where they have lead to an improvement of the recognition accuracy. These kinds of constraints restrain the average slope of the warping path, such that long horizontal and vertical stretches simply cannot exist any longer, which means that they are not appropriate to account for speech pauses that occur in only one of the speech utterances. In fact, any other kind of structural difference between the speech utterances, such as insertions or deletions of certain phonemes or the possible existence of extra/modified/omitted words in one of the utterances, cannot be allowed for. Moreover, the usage of local constraints with inherent slope limitations restrains the average slope on the whole warping path, which means synchronisation can be lost in specific situations. Lab tests have shown that the use of slope constraints with inherent slope limitations resulted in a reduced number of distortions in specific situations (namely those where no speech pauses occurred in source and reference signal). Although these constraints restrain the average slope of the warping path, the instantaneous slope can still correspond to unrealistic values, which may be responsible for perceived distortions (e.g. for a type II local constraint, the average slope lies between ½ and 2, but the instantaneous slope takes one out of 3 values: 0, 1 or ∞).

Local constraints with inherent slope limitations exclude in se certain regions of the XY-plane where the warping path could traverse. Global constraints are used to circumvent one of the main drawbacks of DTW, namely its quadratic time and space complexity. By prohibiting the warping path to traverse outside a predefined allowed zone, the time and space costs can be made linear in the lengths of the speech utterances (local spectral distortions outside the legal zone do not need to be computed). A global path constraint that is often used is the Sakoe-Chiba bound, which constrains the warping path to lie within a fixed distance of the diagonal.

As can be seen from equation (1), the weighting function $m(k)$ controls the contribution of each short-time acoustic distortion to the global dissimilarity measure. On a global scale, care must be taken that the weighting function results in a global normalising factor $M_\phi$ which is constant irrespective of the length of the considered path. On a local scale, it is possible to associate the weighting function with the prescribed local path constraints so that a preference for locally allowable paths can be applied. Fig. 5 illustrates slope weighting applied on a type II local constraint: the number associated with each 'subpath' (along the arcs) is the weighting value m(k). Since a higher local distortion represents a less favourable or less likely match, larger weighting values are used for less favourable paths.

The use of a system for time synchronisation as in Fig. 1 has as its most important disadvantage that the result of automatic synchronisation can suffer from audible distortions. These distortions are usually not caused by errors in the measured timing relationship between the two utterances, nor by the system that is used to perform the time-scaling. On the contrary, lab tests demonstrate that both the DTW procedure to determine the time warping path and the time scaling usually operate flawlessly. It is therefore concluded that the many audible distortions are due to flaws in the state-of-the-art approach itself. Indeed, two versions of a same dialog or score usually differ in more than just their timing. For example, while speaking, consonant clusters are sometimes pronounced carefully with a distinctive realisation of the different consonants, while at other occasions, the consonants are heavily co-articulated and blended in only one or a few a-typical speech sounds. If in the timing reference the consonants were carefully produced, they will typically last much longer than when they are assimilated into one grunt-like sound. Usually, this is correctly reflected in the time warping function that detects the grunting sound should cover much more time in order to synchronise the two utterances. If applied straightforwardly for time scaling $U_1$, as in the prior art systems (see Fig. 1), this results in an unrealistically long grunt-like segment that is perceived as a distortion. The reason for this is not that the timing relation is in error, nor that the time scaling system performed badly, the cause of the perceived distortion is that a heavily co-articulated grunt should not normally exceed a certain maximum amount of time in natural speech.

As another illustrative example of the fact that the source signal can often sound distorted when the timing from another reference utterance is imposed on it, the situation is given where a breathing pause occurs in the reference signal that is not present in the source signal. In that case, DTW will correctly align the parts of source and reference signals before and after the breathing pause, and insert a vertical piece in the warping path that covers the duration of the pause in the reference signal (see Fig. 4). When time scaling the source signal, both pieces of the source signal are properly aligned in time, before and after the breathing pause, respectively, but during the breathing in the reference, the source signal is "frozen" and a sound that originally lasted only a few milliseconds is time stretched to cover the duration of the whole breathing pause, which can last several hundreds of milliseconds. This is obviously perceived as an abnormal portion of sound in the time-synchronised signal.

Very often such situations where distortions occur are thus caused by dissimilarities in the two utterances and often correspond to time-scaling factors that are very large or very small. Such situations can be seen as segments of the time warping function with very large or very small derivatives. Such steep (almost) vertical or shallow (almost) horizontal parts of the warping path are sometimes referred to as singularities. Fig.6 and Fig.7 illustrate a typical example of a singularity: a small vertical portion in the warping path corresponds to a local time-scaling factor of infinity, which in practice means that, during synthesis, a certain phoneme or frame is repeated a large number of times. Among the many different possible causes for this lack of 'smoothness' of the warping path is the difference in duration of speech pauses (or non-speech segments) between identical words, the (possible) presence of speech pauses between different words, the intra- and inter-speaker variability and the possibility of missing, extra or modified words in one of the speech utterances.

It should be noted that, other than the examples given, there are many more situations in which the traditional systems produce audible distortions. For instance, environmental noises or other non-speech sounds can be present in the source signal. These may be of a nature that does not allow time-scaling to the same extent as do most speech sounds (e.g., some metallic clicking sounds or the attacks of some musical notes). When such sounds are time stretched in accordance to the timing difference between the underlying original and reference speech signals, they are perceived as abnormal and distorted.

In general, it is observed that because of acoustic differences between the source signal and the reference signal, the source signal may not be suited for presentation with the same timing as the reference signal. This can be related to the new rhythm (speaking rate) not being suited for the speech (or general audio) sound, but it could also be related to excessive variations in rhythm (for example after a speaking pause, the rhythm of the reference recording could be very much different from the speaking rate before the pause. If no pause is present in the source signal, the sudden change in speaking rate at the position where the pause occurred in the reference is also perceived as abnormal and undesirable.

As mentioned, in general the source signal may not be suited for presentation with the same timing as the reference signal because of acoustic differences between the source signal and the reference signal. Therefore there is a need for a new approach to the problem of time synchronisation.

## Aims of the invention

The present invention aims to provide a method and device for time synchronising acoustic signals that overcomes the problems of the prior art solutions.

## Summary of the invention

The present invention relates to a method for time synchronisation of acoustic signals comprising the steps of

- receiving a first and a second acoustic signal,
- determining information related to the timing relationship between the first and the second acoustic signal,
- applying a time scaling function on one of the acoustic signals for adjusting the timing relationship between said signals,

characterised in that the method further comprises a step wherein the time scaling function is determined by minimisation of the difference between the time scaling function and the timing relationship, said minimisation selecting among possible time scaling functions the time scaling function as one yielding natural sounding perceived quality of the time scaled acoustic signal.

In a preferred embodiment the timing relationship between the first and the second acoustic signal is obtained by determining a time warping path, optionally a dynamic time warping path.

Advantageously, the first and second acoustic signals are monophonic signals. Possibly at least one of the signals is in background noise. In a preferred embodiment the monophonic signals are speech signals. The method for time synchronisation then preferably comprises a further step of classifying segments of at least the first or second acoustic signal as segments of activity or non-activity of the monophonic signals. In a further step said segments of non-activity from the first acoustic signal and optionally also from the beginning and the end of the second acoustic signal may be discarded.

In an advantageous embodiment the timing relationship between the first and the second acoustic signal is obtained by applying sound segmentation techniques. Such techniques identify specific sounds in an audio signal and they indicate where these specific sounds begin and end (segmentation) and label them with the identity of the sound. Thus, after segmentation of the first and the second acoustic signal, their timing relationship can easily be determined from the position of the correspondingly labelled segments in the two acoustic signals.

Preferably a constrained minimisation is performed in the method in order to obtain natural sounding perceived quality of the time scaled acoustic signal.

In a second aspect the invention relates to a system for time synchronisation of acoustic signals comprising

- receiver means for receiving a first and a second acoustic signal,
- measuring means for determining information related to the timing relationship between the first and second acoustic signal,
- means for applying a time scaling function on one of the acoustic signals for adjusting the timing relationship between the signals.

The system further comprises means for determining the time scaling function, whereby said means for determining are arranged for

- being fed with the information related to the timing relationship,
- outputting the time scaling function to the means for applying the time scaling function on the one acoustic signal, and
- determining the time scaling function by constrained minimisation of the difference between the time scaling function and the timing relationship, said constrained minimisation selecting among possible time scaling functions the time scaling function as one yielding natural sounding perceived quality of the time scaled one acoustic signal.

Preferably the means for determining the time scaling function further comprises means for classifying or for comparing segments of the received first and second acoustic signal.

## Short description of the drawings

Fig. 1 represents a time synchronisation scheme as known in the prior art.
Fig. 2 represents an example of a warping path.
Fig. 3 represents various forms of local constraints.
Fig. 4 represents two speech utterances and the corresponding warping path.
Fig. 5 represents a slope weighting applied on a type II local constraint.
Fig. 6 represents a singularity in a warping path.
Fig. 7 represents the waveform corresponding to the singularity shown in Fig.6.
Fig. 8 represents a block scheme of the approach according to the invention.
Fig. 9 represents in detail an example implementation of the present invention.
Fig. 10 represents an example of a possible source and reference signal.
Fig. 11 represents the warping path for the source and reference signal from Fig. 10.
Fig. 12 represents a smoothing of the warping path.
Fig. 13 represents an additional step for generating natural sounding, perfectly lip synched speech.
Fig. 14 represents the global timing relationship for the source and reference signal in Fig.10.
Fig. 15 represents the concept of prosody transplantation.
Fig. 16 represents the timing relationship between a live recording (a) and a studio recording (b). Fig.16(c) represents the time-scaled resulting signal.

## Detailed description of the invention

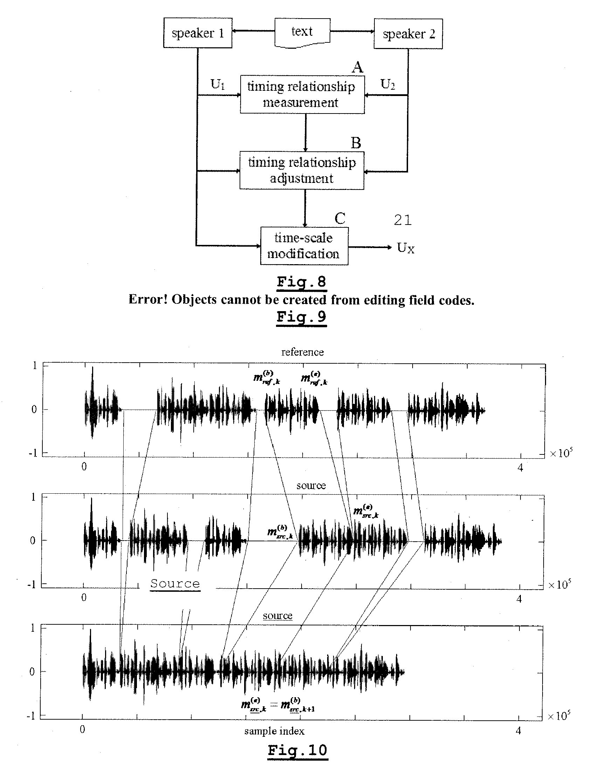

In the approach according to the present invention, conceptually an additional functional block is introduced in the scheme of Fig.1, as illustrated in Fig.8. This new block (B) ensures that the time scaling to be applied to the source signal does not lead to perceived distortions or unnatural sounding signals.
The invention is applicable to any kind of acoustic signal. In a preferred embodiment of the invention the acoustic signals are monophonic signals, i.e. signals coming from one source. The monophonic signals may possibly be embedded in background noise. Well known examples of monophonic signals are speech signals. In the further description below mostly the example of speech signals is considered.
To achieve this, the time scaling function in general modifies the measured timing relationship such as to obtain a good compromise between sometimes conflicting requirements:

- The resulting signal output after time scaling should be synchronised with the reference signal (with an accuracy that depends on the specific application).
- The resulting time-scaled signal should be free from distortions, which imposes restrictions on several aspects of the time scaling function (e.g., its first and higher order derivatives). The precise nature of these restrictions generally depends on the application, on the nature of the source signal's segment to be time scaled, and on the properties of human auditory perception.
- The resulting time-scaled signal must correspond to natural sounding speech, meaning that no unnatural sounding speaking rates/accelerations/decelerations may be perceived.
- The synchronisation of speech utterances should as much as possible be accomplished in an automatic manner.

The present invention therefore proposes a solution with the following features :

(1) in order to deal with the possible problem of having to delete, insert, stretch, compress or leave unmodified a segment in the source signal when the sound source of interest was not active in either the source signal or the reference signal:

- an activity/non-activity classification of the reference signal is performed to segment this signal in active/non-active segments.
- to find for each of the active segments in the reference signal the corresponding active segments in the source signal, thereby using information derived from the measured timing relationship between source and reference signal,

(2) to recalculate the sub-warping paths for each of the pairs of corresponding active signal segments in reference and source signal,
(3) to modify each of the recalculated sub warping paths such that they are smooth enough to satisfy the imposed restrictions and remain as closely as possible to the original sub warping paths,
(4) to use the smoothed sub warping paths to form a final global warping path,
(5) to use this global warping path for the actual time-scaling of the source signal.

In case no non-active segments are present in source AND reference, then only steps 3 and 5 need to be performed.

A description of an implementation example of the invention is given below to illustrate the concept and the specific procedures and measurements that can be used to achieve time synchronisation of acoustic signals in accordance with the present invention.

The techniques used to attain high-quality, natural-sounding lip-synched speech in an example implementation in accordance with the present invention are summarised in the time synchronisation system shown in Fig. 9. They are explained in the context of DTW, which is also the most preferable technique for speech signal time registration to apply in a particular synchronisation device according to the present invention. However, as also mentioned in the further description below, using dynamic time warping is just one possible approach. The skilled person will immediately recognize that the use of hidden Markov model techniques, for example, can be envisaged as an alternative.

As explained in Fig.8, the system of Fig. 9 scales the time axis of a "source" signal (1) in accordance with the timing relationship (16) between this source signal and a given "reference" signal (2), but in such a way that the resulting output signal (21) after time scaling is a realistic natural sounding signal that achieves a proper compromise in being lip-synchronous with the reference and being free of distortions. The parts corresponding to the various blocks (A,B,C) of Fig.8 are indicated in Fig.9. The various blocks are now discussed more in detail. However, it is repeated once again that Fig.9 only shows one possible implementation. Alternative designs can be envisaged as a skilled person will readily appreciate.

Block 'A' : timing relationship measurement

The source (1) and reference (2) signal are analyzed in analyzer blocks (3) and (4), respectively, and from this analysis parameters are extracted that capture the short-time varying nature of these speech signals. Many parametric representation methods exist. A good overview is given in 'Signal modelling techniques in speech recognition' (Picone, Proc. IEEE, vol.81, no.9, pp.1215-1247, Sept.1993).

With the parameters from (3) and (4), the timing relationship between source (1) and reference (2) signal is measured using well-known state-of-the-art techniques for time registration of speech signals. A very advantageous option is the use of dynamic time warping techniques (for instance with the use of a local constraint without an inherent slope limitation as previously explained). Another possibility is the use of speech recognition techniques based on hidden Markov models. For the latter, the timing relationship between the source (1) and reference (2) signal can be obtained by piecewise linear interpolation of the corresponding phoneme boundaries in the two signals. The timing relationship between the source signal (1) and the reference signal (2) is measured in block (5).

Block 'B' : timing relationship adjustment

In discriminators (6) and (7), a classification is made between speech and non-speech segments in source (1) and reference (2) signal, respectively. The speech/non-speech discriminators can be energy-based if signal-to-noise ratios of source (1) and reference (2) are high. If this is not the case, other more sophisticated discriminators can be considered that for instance involve a preliminary speech enhancement step, such as noise estimation techniques in combination with spectral subtraction (see e.g. "Towards improving speech detection robustness for speech recognition in adverse environments", L. Karray et al., Speech Comm. 40(3), pp.261-276, 2003). From the classification in the speech/non-speech discriminators (6) and (7) the non-speech segment boundaries in the source (1) and reference (2) signal are derived and subsequently the durations of these non-speech segments are determined. This is shown in Fig. 9 in blocks (8) and (9), respectively. In (10), all non-speech segments present in the source signal (1) are removed. The signal obtained in this manner is from now on called 'source' (see Fig.9).

In order to synchronize the source signal (1) with the reference signal, the timing relationship measured in block (5) is adjusted. Therefore a new global timing relationship is generated in (16) that - once applied during the time-scale modification step (C) - results in a time-scaled realistic natural sounding signal (21) that achieves a proper compromise in being lip-synchronous with the reference signal (2) and is free of distortions. In fact, the adjustment procedure is carried out in two steps.

In a first step, an intermediate timing relationship (15) is determined that only accounts for all non-speech segments in the reference signal (in as far as these are present). In a second step, local timing relationships between corresponding (or matching) pure speech segments from signal 'source' and the reference (2) are measured in (12), adjusted in blocks (13) and (14), and used in combination with the intermediate timing relationship (15) to generate the global timing relationship (16) that in its turn will be used in block (C) to generate the resulting output signal (21).

In block (11) P+1 corresponding/matching pure speech segments are extracted from the signal 'source' obtained in block (10) and the reference signal (2), where P denotes the number of non-speech segments in the reference signal (2). Without loss of generality it is assumed throughout the rest of the description that no non-speech segments occur before or after the first and last speech segment, respectively, in source and reference signal. For the k-th "matching" pair (k=1, ... , P+1), the speech segment from the reference is delimited by time markers $\left(m^{(b)}_{ref,k}; m^{(e)}_{ref,k}\right)$, while the speech segment from the source is delimited by time markers $\left(m^{(b)}_{src,k}; m^{(e)}_{src,k}\right)$. These time markers can be derived from the timing relationship (5) obtained with the state-of-the-art techniques in the following manner:

1. From blocks (8) and (9) the time markers are known delimiting the non-speech parts in source (1) and reference (2), respectively. These are denoted $\left(p^{(b)}_{src,k}; p^{(e)}_{src,k}\right)$ and $\left(p^{(b)}_{ref,k}; p^{(e)}_{ref,k}\right)$ from now on (with k=1, ..., P). This way, the time markers $\left(m^{(b)}_{ref,k}; m^{(e)}_{ref,k}\right)$ in the reference signal (2) can be easily found (see Fig. 10, upper panel).

$$m^{(b)}_{ref,1} = 0$$
$$m^{(e)}_{ref,P+1} = duration\ \ reference$$
$$for\ \ \ k = 1\ to\ P$$
$$m^{(e)}_{ref,k} = p^{(b)}_{ref,k}$$
$$m^{(b)}_{ref,k+1} = p^{(e)}_{ref,k}$$
$$end$$

2. If the timing relationship obtained in (5) is denoted $f: t_{src} \rightarrow t_{ref} = \tau(t_{src})$, then the corresponding time markers $\left(m^{(b)}_{src,k}; m^{(e)}_{src,k}\right)$ in the source signal (1) can be found as follows (Fig. 10, middle panel):
*for k=*1 *to* (*P*+1)

$$for\ \ \ k = 1\ to\ (P+1)$$
$$m^{(b)}_{src,k} = \tau^{-1}\left[m^{(b)}_{ref,k}\right]$$
$$m^{(e)}_{src,k} = \tau^{-1}\left[m^{(e)}_{ref,k}\right]$$
$$end$$

It is to be noted that this is just a specific choice made for the determination of the time markers of the speech segments in the source signal. Other alternatives could be envisaged that alleviate possible flaws due to errors in the markers for the reference speech segments.

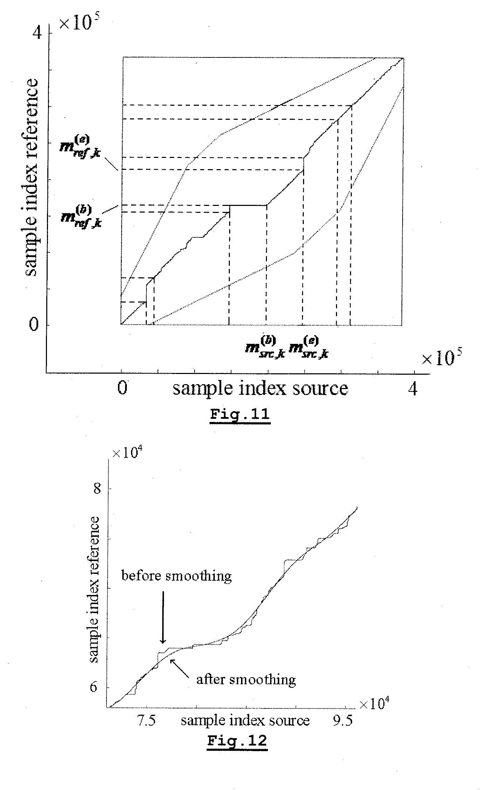

3. Finally, from the previous step, the time markers $\left(m^{(b)}_{src,k}; m^{(e)}_{src,k}\right)$ for signal 'source' can be derived (Fig. 10, lower panel) : Fig. 11 illustrates the warping path for the source and reference signal from Fig. 10 measured with state-of-the-art techniques as used in block (5). Note that DTW with a type I local constraint is used in this example.

In block (12), P+1 "local" timing relationships are measured (denoted "sub warping paths" between the corresponding/matching pure speech segments extracted in (11) from the source and reference (2) signal. For the measurement of the local timing relationships, again well-known state-of-the-art techniques as for the measurement of the timing relationship in (5) can be used.

Of course, these "sub-warping paths" contain many singularities that would result in audible distortions. Therefore, an additional smoothing step is applied on these sub-warping paths to restrain their first derivative to more realistic values (in module 13). Many smoothing techniques could be applied, e.g. local regression smoothing that combines much of the simplicity of linear least squares regression with the flexibility of nonlinear regression. It does this by fitting simple models to localized subsets of the data to build up a function describing the deterministic part of the variation in the data, point by point. Fig. 12 illustrates this smoothing method. At each point in the data set, a low-degree polynomial is fit to a subset of the data. The polynomial is fit using weighted linear least squares, giving more weight to points near the point whose response is being estimated and less weight to points further away. Once the parameters of the polynomial are known, this polynomial is evaluated in the considered 'point of estimation'.

Using DTW with sufficiently restricted and especially crafted slope constraints could be an alternative implementation of this smoothing step that is computationally much less expensive. However, because it is a less explicit way to ensure perceptively acceptable time scaling functions for the source signal and therefore probably also a less effective way, it was not preferred in this example implementation. A more general post-processing of the sub warping paths for the speech parts would estimate the nature of the source signal segments (e.g., by classifying in one of a number of classes, such as plosive, sustained vowel-like, sustained fricative-like, and phonemic transitions), and the (time-varying) degree of synchronization required (e.g., accounting for the visibility of lip movements) to achieve an optimal time scaling function, possibly by some kind of piecewise linear correction procedure on the sub warping path obtained with the type I constraint.

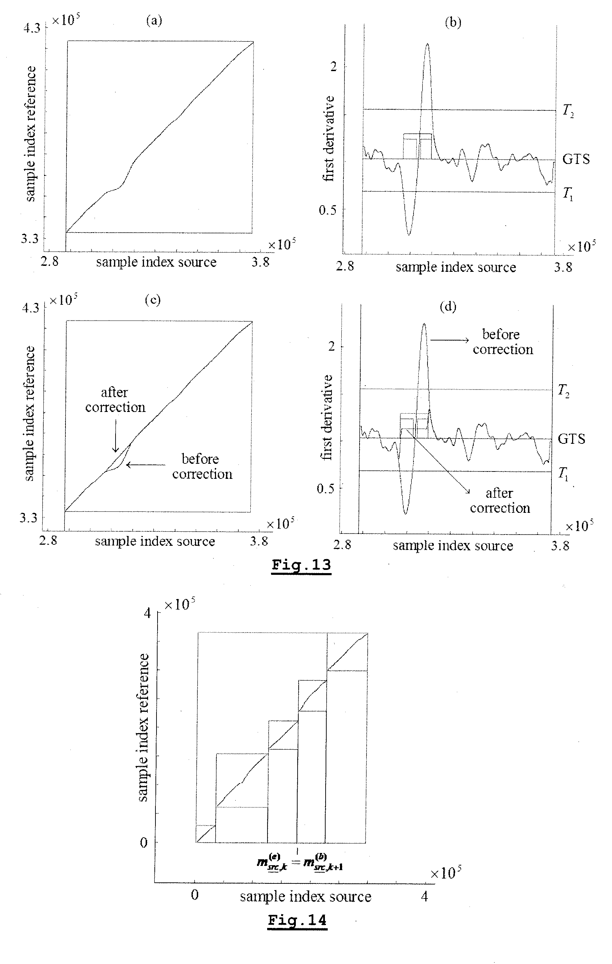

Although the smoothing process implemented for (13) is effective to restrain the first derivative of the warping path to more realistic values, peaks in this function may generate unnatural sounding speech rates/accelerations/decelerations. Therefore, an additional step is needed to generate natural sounding, lip synched speech (natural sounding module 14). One way to accomplish this is illustrated in Fig.13(a) to (d). Fig.13(a) shows a possible sub warping path (after smoothing): the dip in the smoothed sub warping path would generate an unnatural sounding speech acceleration followed by deceleration. Fig. 13(b) shows the first derivative on this smoothed sub warping path. The two peaks are responsible for this unnatural sounding behaviour and by expressing that the sub warping path should not deviate too much from the diagonal in Fig.13(a) or that the first derivative should not deviate too much from the GTS-factor (global time scaling) in Fig.13(b), one can locate the regions where this unnatural behaviour would occur (see block waves in Fig.13 (b)). The GTS-factor simply represents the duration of the speech segment originating from the reference signal divided by the duration of the speech segment originating from the source signal. Applying a linearization procedure on the smoothed warping path for these regions can alleviate the problem as illustrated in Fig. 13(c). Fig. 13(d) illustrates the first derivative after the correction procedure has been applied.

In block (16) the global timing relationship is generated which is subsequently used in the time-scaling block (C) to generate the time-scaled result (21). Therefore first an intermediate warping path is generated in (15) by placing P vertical stretches of length $\left( p_{ref,k}^{(e)} - p_{ref,k}^{(b)} \right)$ on positions $m_{\underline{src},k}^{(e)} = m_{\underline{src},k+1}^{(b)}$, with k=1, ..., P. This intermediate warping path accounts for the possible presence of non-speech segments between different and/or identical words/phonemes/phrases in the source (1) and reference (2) signal. Subsequently, the P+1 sub warping paths obtained in (14) are "added" in (16) to this intermediate warping path (see Fig.14).

Block 'C' : time-scale modification

With the global timing relationship from (16), the result (21) can be generated in the time scale modification block (C). One possibility to accomplish this is the use of high-quality overlap/add-techniques as described in 'A unified view on synchronized overlap-add methods for prosodic modification of speech' (W. Verhelst et al., Proc. ICSLP-91, pp.II.63-II.66, Oct.2000) (e.g. techniques based on waveform similarity) on the source signal (blocks (17), (18) and (19) are identical to (6), (8) and (10)). Additional fading-techniques at the speech segment boundaries of the result (21) can be applied, and depending on the application, the non-speech segments of the resulting signal (21) can be any of a number of background signals, e.g. silence or noise. In the time-scale modification block (C), additional corrections for pitch or intonation differences between source (1) and reference (2) signal can be applied.

Systems that can accomplish the automatic or computer assisted time synchronisation of audio signals can be used for many practical and important tasks. A brief and non-exhaustive overview is given below. Distinction can be made between on the one hand applications that involve a timing relationship analysis between audio signals as well as a signal reconstruction step depending on the obtained timing relationship, and on the other hand applications mainly based on analysing a timing relationship between audio signals.

Prosody transplantation systems allow to transplant, besides timing/rhythm, the most important perceptual aspects of the human voice (the so-called prosodic features of the human speech like pitch/intonation/stress, loudness and timbre) from one utterance (donor) onto another (patient). This way, hybrid utterances can be produced, which, for example, have the same timing, pitch contour and loudness as the donor utterance but the same timbre as the patient signal.

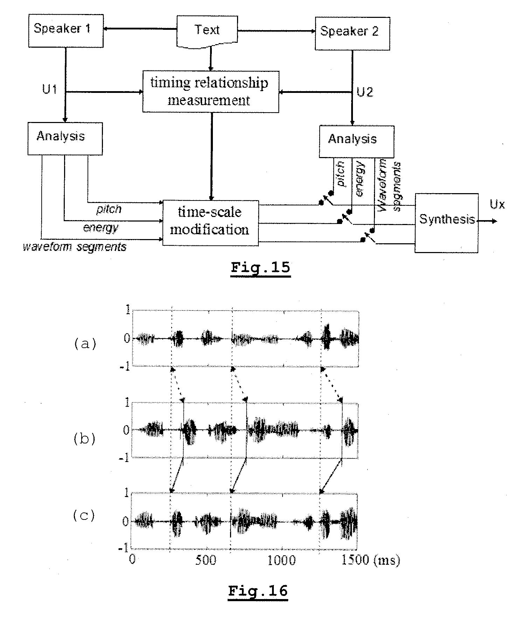

Fig. 15 illustrates the concept of prosody transplantation. A same text/song is spoken/sung by a same or different persons, resulting in two utterances U1 and U2. Both utterances are analyzed to obtain the acoustic parameter contours of pitch, loudness and timbre. As in the general scheme for time synchronization (see Fig. 1), the timing relationship between both utterances is measured. A new utterance Ux is constructed which has the same time structure as U2 and its pitch, loudness and timbre can each be chosen to originate from either U1 or U2. This way, selected speech characteristics from one utterance can be transplanted to another. The required modifications can be performed in one step by means of the PSOLA algorithm for example (see 'Pitch-Synchronous Waveform Processing Techniques for Text-to-Speech Synthesis Using Diphones', E. Moulines, F. Charpentier, Speech Communication, vol. 9, pp. 453-467, 1990). The PSOLA algorithm is disclosed in one of its forms in patent EP-B-0363233.

A first possible application field of prosody transplantation systems relates to automatic dialogue replacement (ADR) or post-synchronisation in the audiovisual industry. Automatic dialogue replacement is a film sound technique which involves the re-recording of dialogue after photography. On an outdoor film set where dialogues are recorded, several uncontrollable issues like traffic or noise may render the production sound unusable. Therefore, a so-called ADR session with the original actor is needed. During such a session, the actor attempts to re-perform the lines while watching the image on the screen. Several takes are made, and based on the quality of the performance and synchronisation, one take is selected and used in the film. If the original actor is no longer available for the reperformances, the original soundtracks can be modified manually by means of tedious copy-paste procedures, linear time-scaling procedures, noise suppression techniques, etc... The described process is clearly error-prone, labour-intensive, time-consuming and thus very expensive. Fig.16 shows for three specific time instances the timing relationship between a live recording and a studio recording. From the figure, it is clear that both recordings are asynchronous. After time-scaling of the studio recording, a time-scaled result is obtained which is synchronous with the live recording (the correspondence with the live recording is indicated with the vertical dotted lines.).

The prosody transplantation system of Fig.15 should thus produce a Ux with all the acoustic parameters from U1 (source-studio recording) and with the same time structure as U2 (reference-outdoors recording). The result should then correspond to a time-scaled version of U1 that is lip-synchronous with U2.

A prosody transplantation system can be used for example:

- to make corrections on the timing, pitch and loudness of a karaoke performance or singing performance, based on a correct performance, such as the one of the original artist's performance.
- for the development of tools for speech therapists to help people with speech disorders (e.g. aphasia, dysphonia, dysarthria, verbal atraxia, dyslexia, ...). A tool for prosody transplantation can be valuable for analysis purposes, but could also be useful for a speech therapist to help re-educate these people by making them talk more natural, or making them better intelligible.
- for the development of tools for language learning applications: when a new language is to be learned, it is of great importance to have good pronunciation, rhythm, intonation ...
- in text-to-speech applications for transplanting intonational patterns from a natural utterance in a prosodic database onto the synthesizer's output.

Another important field of application is the dubbing of an original soundtrack (dialogue/voices) with a replacement track in another language. Examples may be the dubbing of an original English movie with dialog recordings by German actors, or the production of multilingual versions of a feature film or educational program for distribution on DVD, etc...

It is important to note that synchronisation systems are not restricted to work with speech signals, as they can in principle be applied on any type of audio signal. Therefore, synchronisation systems can also be used, for example, for the automatic or computer assisted time alignment of musical performances that were originally insufficiently synchronised or for replacing one musical track in a composition with a new recording, for example by another musician and/or with another instrument.

Other possibly interesting applications comprise an automatic time alignment tool for segmentation and labeling of continuous speech with a given phonetic transcription. This could be done by transferring the labels from a previously labeled utterance, e.g. a synthetic speech utterance. Automatic labeling of a database not only saves human effort, but also reduces the arbitrariness of the labeling process if done manually by a human. If the time alignment module is used to align synthetic and natural speech utterances, it can be used to make improvements in the duration rules for synthesis-by-rule synthesizers.

**Claims**

1. Method for time synchronisation of acoustic signals comprising the steps of

 - receiving a first and a second acoustic signal,
 - determining information related to the timing relationship between said first and said second acoustic signal,
 - applying a time scaling function on one of said acoustic signals for adjusting said timing relationship between said signals,

 **characterised in that** the method further comprises a step wherein said time scaling function is determined by minimisation of the difference between said time scaling function and said timing relationship, said minimisation selecting among possible time scaling functions said time scaling function as one yielding natural sounding perceived quality of said time scaled one acoustic signal.

2. Method for time synchronisation as in claim 1, wherein said timing relationship between said first and said second acoustic signal is obtained by determining a time warping path.

3. Method for time synchronisation in claim 1 or 2, wherein said first and said second acoustic signals are monophonic signals.

4. Method for time synchronisation as in claim 3, further comprising a step of classifying segments of at least said first or said second acoustic signal as segments of activity or non-activity of said monophonic signals.

5. Method for time synchronisation as in claim 4, comprising a further step of discarding said segments of non-activity from said first acoustic signal and optionally of discarding said segments of non-activity at the beginning and the end of said second acoustic signal.

6. Method for time synchronisation as in claim 3, wherein said timing relationship between said first and said second acoustic signal is obtained by applying sound segmentation techniques.

7. Method for time synchronisation as in any of the previous claims, wherein a constrained minimisation is performed for obtaining natural sounding perceived quality of said time scaled one acoustic signal.

8. System for time synchronisation of acoustic signals comprising

 - receiver means for receiving a first and a second acoustic signal,
 - measuring means for determining information related to the timing relationship between said first and said second acoustic signal,
 - means for applying a time scaling function on one of said acoustic signals for adjusting said timing relationship between said signals,

 **characterised in that** said system further comprises means for determining said time scaling function, said means for determining arranged for

 - being fed with said information related to said timing relationship,
 - outputting said time scaling function to said means for applying said time scaling function on said one acoustic signal, and
 - determining said time scaling function by minimisation of the difference between said time scaling function and said timing relationship, said minimisation selecting among possible time scaling functions said time scaling function as one yielding natural sounding perceived quality of said time scaled one acoustic signal.

9. System for time synchronisation as in claim 8, wherein said means for determining said time scaling function further comprises means for classifying segments of said received first and second acoustic signal.

10. A program, executable on a programmable device containing instructions, which when executed, perform the method as in any of claims 1 to 7.

**Fig.1**

**Fig.2**

**Fig.3**

**Fig.4**

TYPE II
local constraint

**Fig.5**

**Fig.6**

**Fig.7**

**Fig.8**

Error! Objects cannot be created from editing field codes.

**Fig.9**

**Fig.10**

Fig.11

Fig.12

Fig.13

Fig.14

**Fig.15**

**Fig.16**

**European Patent Office**

**EUROPEAN SEARCH REPORT**

Application Number

EP 07 10 2589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOENS P ET AL: "Split-time warping for improved automatic time synchronization of speech" 1ST ANNUAL IEEE BENELUX / DSP VALLEY SIGNAL PROCESSING SYMPOSIUM, SPS-DARTS 2005, 19 April 2005 (2005-04-19), - 20 April 2005 (2005-04-20) pages 33-36, XP002437169 ANTWERP,BELGIUM Retrieved from the Internet: URL:http://www.esat.kuleuven.be/˜spch/cgi-bin/get_file.cgi?/space/soens_bsps05/atsos.pdf> [retrieved on 2007-06-12] * the whole document * | 1-10 | INV. G10L15/12 G10L21/04 |
| | ----- | | |
| | | | TECHNICAL FIELDS SEARCHED (IPC) |
| | | | G10L |

The present search report has been drawn up for all claims

| Place of search | Date of completion of the search | Examiner |
|---|---|---|
| Munich | 12 June 2007 | RAMOS SANCHEZ, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0363233 B

### Non-patent literature cited in the description

- **W.VERHELST et al.** Rejection Phenomena in Inter-Signal Voice Transplantation. *IEEE Workshop on Applications of Signal Processing to Audio and Acoustics,* 19 October 2003
- **PICONE.** Signal modelling techniques in speech recognition. *Proc. IEEE,* September 1993, vol. 81 (9), 1215-1247
- **L. KARRAY et al.** Towards improving speech detection robustness for speech recognition in adverse environments. *Speech Comm.,* 2003, vol. 40 (3), 261-276
- **W. VERHELST et al.** A unified view on synchronized overlap-add methods for prosodic modification of speech. *Proc. ICSLP-91,* October 2000, II.63-II.66
- **E. MOULINES ; F. CHARPENTIER.** Pitch-Synchronous Waveform Processing Techniques for Text-to-Speech Synthesis Using Diphones. *Speech Communication,* 1990, vol. 9, 453-467